# EUROPEAN PATENT APPLICATION

(11) **EP 2 789 821 A1**
(43) Date of publication of application: **15.10.2014**
(21) Application number: 14161520.3
(22) Date of filing: 25.03.2014
(51) Int. Cl.: F01N 3/28, B32B 7/02, B32B 27/04, D06M 15/693

(54) **Holding seal material, manufacturing method for holding seal material and exhaust gas purification apparatus**

(30) Priority: 09.04.2013 JP 2013081535
(71) Applicant: IBIDEN CO., LTD., Ogaki-shi, Gifu 503-8604 (JP)
(72) Inventor: Suzuki, Daisuke, Takahama-shi, Aichi 444-1301 (JP)
(74) Representative: Louis Pöhlau Lohrentz

(57) **Abstract**

Provided is a mat-like holding seal material made of an inorganic fiber holding an exhaust gas treatment unit and being provided between the exhaust gas treatment unit and a metal casing housing the exhaust gas treatment unit, in which the holding seal material includes a first principal surface and a second principal surface, the holding seal material includes a first region with a predetermined thickness including the first principal surface and a second region with a predetermined thickness including the second principal surface, the first region is soaked with a first organic binder, the second region is soaked with a second organic binder, a glass transition temperature of the first organic binder is higher than a glass transition temperature of the second organic binder, and the first principal surface is in contact with the exhaust gas treatment unit.
This holding seal material can be wound around an exhaust gas treatment unit without causing a gap generated by an inside and outside circumference difference, can prevent the leakage of gas from an exhaust gas purification apparatus, and does not easily decrease operational efficiency when being transported or arrayed.

## Description

### BACKGROUND OF THE INVENTION

### Field of the Invention

The present invention relates to a holding seal material, a manufacturing method for a holding seal material, and an exhaust gas purification apparatus.

### Description of Related Art

Exhaustgasemittedfrom an internal-combustion engine such as a diesel engine contains particulate matter (hereinafter, also referred to as PM) such as tin, and, in recent years, the harmful influence of the PM on the environment or human bodies has become an issue. In addition, exhaust gas also contains harmful gas components such as CO, HC or NOₓ, and thus there is a concern regarding the influence of the harmful gas components on the environment or human bodies.

Therefore, a variety of exhaust gas purification apparatuses made up of an exhaust gas treatment unit made of a porous ceramic such as silicon carbide or cordierite, a metal casing housing the exhaust gas treatment unit, and a holding seal material made of an inorganic fiber and provided between the exhaust gas treatment unit and the metal casing have been proposed as an exhaust gas purification apparatus that traps PM in exhaust gas or purifies the harmful gas components. The holding seal material is provided mainly for preventing the exhaust gas treatment unit from coming into contact with the metal casing covering the outer circumference of the exhaust gas treatment unit so as not to be broken due to oscillation or impact generated during the running or the like of a vehicle or for preventing exhaust gas from leaking from between the exhaust gas treatment unit and the metal casing.

When manufacturing the above-described exhaust gas purification apparatus, there is a concern that the inorganic fiber segments may protrude or scatter from the surface of the holding seal material. In a case in which the inorganic fiber segments protrude or scatter from the surface of the holding seal material, when the holding seal material is integrated into the exhaust gas purification apparatus, there is a possibility of the scattered inorganic fiber segments intruding into human bodies that may cause damage to one's health, and there was a problem in that end sections of the inorganic fiber segments came into contact with an operator so as to cause discomfort.

In Patent Document 1, at least one surface of a holding seal material is coated with a mixture of an inorganic binder and an organic binder to prevent inorganic fiber segments from protruding or scattering from the surface of the holding seal material.

[Patent Document 1] Japanese Unexamined Patent Application Publication No. 2006-342774

Patent Document 1 discloses a holding seal material having both surfaces coated using a coating material of polyacrylic acid, a coating solution of an aqueous solution of potassium silicate or a coating solution of aluminum phosphate. When both surfaces of the holding seal material are coated as described above, both surfaces of the holding seal material become hard.

When the above-described holding seal material is wound around an exhaust gas treatment unit, since the holding seal material has a thickness, an inside and outside circumference difference is causedbetween a surface of the holding seal material wound around the exhaust gas treatment unit (hereinafter, also referred to as "inside surface") and a surface on the opposite side (hereinafter, also referred to as "outside surface"). The inside and outside circumference difference causes a gap on the outside surface. The presence of the gap causes the leakage of exhaust gas.

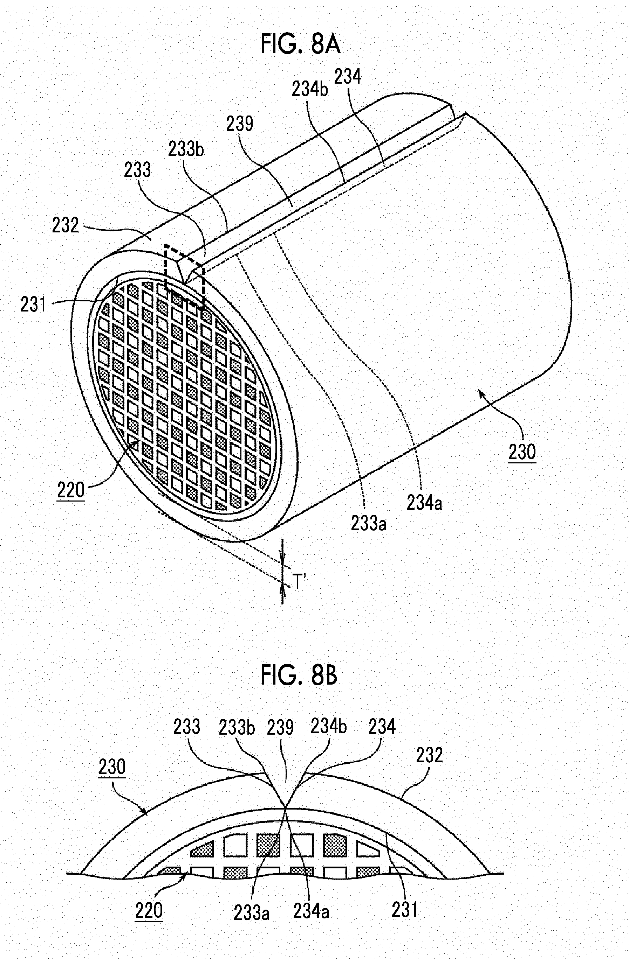

Fig. 8A is a perspective view schematically illustrating an example of a state in which a holding seal material of the related art is wound around an exhaust gas treatment unit. Fig. 8B is an enlarged view of a part surrounded by a broken line in Fig. 8A seen from a direction in parallel with the longitudinal direction of the exhaust gas treatment unit.

The holding seal material 230 of the related art has a predetermined thickness (indicated using arrow T' in Fig. 8A), and includes a first principal surface 231 and a second principal surface 232 that is a principal surface on the opposite side of the first principal surface 231. In addition, the holding seal material 230 includes a first end surface 233 that is one of end surfaces in the longitudinal direction and a second end surface 234 that is an end surface on the opposite side of the first end surface 233. The first principal surface 231 and the second principal surface 232 are coated as described above.

In Figs. 8A and 8B, the holding seal material 230 is wound around the exhaust gas treatment unit 220 so that the first principal surface 231 of the holding seal material 230 comes into contact with the exhaust gas treatment unit.

In Figs. 8A and 8B, a side 233a formed by the first principal surface 231 and the first end surface 233 of the holding seal material 230 and a side 234a formed by the first principal surface 231 and the second end surface 234 of the holding seal material 230 are in contact with each other. However, since the holding seal material 230 has a thickness T' , when the holding seal material 230 is wound around the exhaust gas treatment unit 220, an inside and outside circumference difference is caused. That is, since the length of the first principal surface 231 in the longitudinal direction and the length of the second principal surface 232 in the longitudinal direction are substantially the same, there are no cases in which a side 233b formed by the second principal surface 232 and the first end surface 233 of the holding seal material 230 and a side 234b formed by the secondprincipal surface 232 and the second end surface 234 of the holding seal material 230 are in contact with each other, and a gap section 239 is generated between the first end surface 233 and the second end surface 234.

Since the second principal surface 232 of the holding seal material 230 is coated, the second principal surface 232 becomes cured. Therefore, the second principal surface 232 of the holding seal material 230 does not easily stretch. Therefore, it is difficult to fill the gap section 239.

In addition, in the holding seal material 230, it is also possible to consider to decrease the amount of coating so as to allow the holding seal material 230 to stretch; however, in this case, the holding seal material 230 becomes soft as a whole. Therefore, when transporting the holding seal material 230, a part of the holding seal material 230 bends and hangs downward. When the holding seal material 230 is transported in the above-described state, there is a case in which the holding seal material 230 is twisted. In addition, when a plurality of layers of the holding seal material 230 is transported at one time, there is a case in which hung parts of the layers of the holding seal material 230 collide with each other. In such a case, there is a case in which the holding seal material 230 may break. Particularly, when an attempt is made to transport a number of layers of the holding seal material 230 at one time, the above-described problem becomes significant. In addition, when arraying the layers of the holding seal material to house the holding seal material 230 in the exhaust gas purification apparatus at a transportation destination, it is necessary to adjust the shape of the holding seal material layer by layer to prevent the holding seal material 230 frombending or twisting. Therefore, operational efficiency decreases. That is, since it is difficult to efficiently transport the above-described holding seal material 230 and to array the holding seal material, operational efficiency decreases when the above-described operation is carried out.

### SUMMARY OF THE INVENTION

The invention has been made to solve the above-described problems, and an object of the invention is to provide a holding seal material that can be wound around an exhaust gas treatment unit without causing a gap generated by an inside and outside circumference difference, can prevent the leakage of gas from an exhaust gas purification apparatus, and does not easily decrease operational efficiency when being transported or arrayed.

To achieve the above-described object, there is provided a mat-like holding seal material made of an inorganic fiber holding an exhaust gas treatment unit and being provided between the exhaust gas treatment unit and a metal casing housing the exhaust gas treatment unit, in which the holding seal material includes a first principal surface and a second principal surface, the holding seal material includes a first region with a predetermined thickness including the first principal surface and a second region with a predetermined thickness including the second principal surface, the first region is soaked with a first organic binder, the second region is soaked with a second organic binder, a glass transition temperature of the first organic binder is higher than a glass transition temperature of the second organic binder, and the first principal surface is in contact with the exhaust gas treatment unit.

When exhaust gas is made to flow into an exhaust gas purification apparatus in which the holding seal material of the invention is used, the holding seal material of the invention exhibits the following effects before the organic binders are burned.

In the holding seal material of the invention, the glass transition temperature of the first organic binder is higher than the glass transition temperature of the second organic binder. Generally, the glass transition temperature of a resin has a correlation with the hardness (softness) of the resin. That is, since the first organic binder soaked into the first region has a higher glass transition temperature than the second organic binder, a resin configuring the first organic binder is harder than a resin configuring the second organic binder. Therefore, the first region in the holding seal material of the invention soaked with the first organic binder is relatively harder than the second region in the holding seal material of the invention soaked with the second organic binder, and the second region is relatively softer than the first region. In the exhaust gas purification apparatus in which the holding seal material of the invention is used, the first principal surface of the holding seal material of the invention is in contact with the exhaust gas treatment unit. That is, the first principal surface of the holding seal material of the invention serves as an inside surface, and the second principal surface of the holding seal material of the invention serves as an outside surface. In a case in which the second region in the holding seal material is soaked with an organic binder having a high glass transition temperature such as the first organic binder, since the second region becomes hard, the second region does not become easily stretchable. Therefore, it becomes likely that a gap is generated between both end surfaces of the holding seal material wound around the exhaust gas treatment unit due to an inside and outside circumference difference of the holding seal material. However, in the holding seal material of the invention, since the second region is soaked with the second organic binder, the second region is flexible. Therefore, when manufacturing an exhaust gas purification apparatus, it is possible to wind the holding seal material of the invention around the exhaust gas treatment unit without generating a gap due to the inside and outside circumference difference. Therefore, even when the holding seal material of the invention is wound around the exhaust gas treatment unit, a gap due to the inside and outside circumference difference is not easily generated in the holding seal material of the invention.

Furthermore, even when exhaust gas is made to flow into the exhaust gas purification apparatus in which the holding seal material of the invention is used, and the organic binders are burned, since the holding seal material of the invention receives pressure from the metal casing, there are no cases in which a gap is generated in the holding seal material of the invention wound around the exhaust gas treatment unit. Therefore, it is possible to prevent the leakage of exhaust gas.

In addition, as described above, the first region in the holding seal material of the invention has been cured more than the second region in the holding seal material of the invention. Therefore, there are no cases in which the holding seal material of the invention is hung when being transported or arrayed. Therefore, it is possible to efficiently handle the holding seal material of the invention. In addition, when manufacturing an exhaust gas purification apparatus using the holding seal material of the invention, there are no cases in which the holding seal material of the invention is broken even when handled somewhat wildly.

In addition, in the holding seal material of the invention, the first region and the second region are soaked with the organic binders. Since the organic binders adhere inorganic fiber segments together, it is possible to prevent the inorganic fiber segments from protruding or scattering from the first principal surface and the second principal surface of the holding seal material of the invention when manufacturing the exhaust gas purification apparatus.

In the holding seal material of the invention, a length of the first region in a thickness direction is desirably set to 1/2 or less of a thickness of the holding seal material.

When the length of the first region in the thickness direction is in the above-described range, the first region in the holding seal material becomes sufficiently hard. Therefore, it is possible to efficiently handle the holding seal material.

In the holding seal material of the invention, a length of the second region in a thickness direction is desirably set to 1/2 or less of a thickness of the holding seal material.

When the length of the second region in the thickness direction is in the above-described range, the second region in the holding seal material is sufficiently flexible. Therefore, a gap is not easily generated due to the inside and outside circumference difference in the holding seal material wound around the exhaust gas treatment unit.

In the holding seal material of the invention, the glass transition temperature of the first organic binder is desirably in a range of 5°C to 50°C.

When the glass transition temperature of the first organic binder is in the above-described range, since the glass transition temperature of the first organic binder becomes equal to or higher than room temperature, the first organic binder is likely to be cured and be in a glass state lacking fluidity. Therefore, the first region in the holding seal material becomes sufficiently hard at room temperature. Therefore, it is possible to efficiently handle the holding seal material.

In the holding seal material of the invention, the glass transition temperature of the second organic binder is desirably in a range of -50°C to lower than 5°C.

When the glass transition temperature of the second organic binder is in the above-described range, since the glass transition temperature of the second organic binder becomes lower than room temperature, the second organic binder is likely to be softened and be in a rubber state having rich fluidity and viscosity. Therefore, in the second region, it is possible to adhere the inorganic fiber segments together using the second organic binder. In addition, since the second organic binder is more flexible than the first organic binder, the inorganic fiber segments adhered to the second organic binder can move to a certain extent. Therefore, the second region in the holding seal material is sufficiently flexible. Therefore, in the holding seal material wound around the exhaust gas treatment unit, it is more difficult for a gap to be generated due to the inside and outside circumference difference.

In addition, a number of the inorganic fiber segments in the holding seal material scatter from the outside surface (second principal surface) of the holding seal material wound around the exhaust gas treatment unit. However, when the second organic binder is soaked into the second region, since the second organic binder adhere the inorganic fiber segments together, it is possible to further prevent the inorganic fiber segments from scattering from the outside surface (second principal surface) of the holding seal material wound around the exhaust gas treatment unit.

In the holding seal material of the invention, a soaked amount of the first organic binder is desirably in a range of 0.2 parts by weight to 12.0 parts by weight, and more desirably in a range of 0.2 parts by weight to 5.0 parts by weight with respect to a weight of 100 parts by weight of the holding seal material.

When the soaked amount of the first organic binder is less than 0.2 parts by weight, since the adhering force of the first organic binder to adhere the inorganic fiber segments becomes weak, it becomes difficult to prevent the scattering of the inorganic fiber segments. In addition, the first region does not become sufficiently hard, and it becomes difficult to efficiently handle the holding seal material.

When the soaked amount of the first organic binder exceeds 12.0 parts by weight, the first region becomes too hard, and it becomes likely that fissures or cracks are generated in the holding seal material wound around the exhaust gas treatment unit.

In the holding seal material of the invention, a soaked amount of the second organic binder is desirably in a range of 0.2 parts by weight to 12.0 parts by weight, and more desirably in a range of 0.2 parts by weight to 5.0 parts by weight with respect to a weight of 100 parts by weight of the holding seal material.

When the soaked amount of the second organic binder is less than 0.2 parts by weight, since the adhering force of the second organic binder to adhere the inorganic fiber segments becomes weak, it becomes difficult to prevent the scattering of the inorganic fiber segments.

When the soaked amount of the second organic binder exceeds 12.0 parts by weight, the second region loses flexibility, and it becomes likely that a gap is generated due to the inside and outside circumference difference in the holding seal material wound around the exhaust gas treatment unit.

In the holding seal material of the invention, a total weight of the first organic binder and the second organic binder is desirably in a range of 0.5 parts by weight to 3. 0 parts by weight with respect to a weight of 100 parts by weight of the holding seal material.

When the total weight of the first organic binder and the second organic binder is 0.5 parts by weight or more with respect to a weight of 100 parts by weight of the holding seal material, since the adhering force of the organic binders to adhere the inorganic fiber segments becomes sufficiently strong, it is possible to prevent the scattering of the inorganic fiber segments. In addition, since the organic binders sufficiently adhere the inorganic binder segments together, it is possible to decrease the bulk of the holding seal material to an appropriate extent. Therefore, it becomes easy to press the exhaust gas treatment unit around which the holding seal material is wound into the metal casing.

When exhaust gas is made to flow into the exhaust gas purification apparatus in which the holding seal material of the invention is used, the organic binders are decomposed and burned due to the heat of the exhaust gas. When the organic binders are burned, harmful gas of non-methane hydrocarbon, nitrogen oxide and the like is generated. When the total weight of the first organic binder and the second organic binder is 3.0 parts by weight or less with respect to a weight of 100 parts by weight of the holding seal material, it is possible to sufficiently reduce the generation of the above-described gas.

In the holding seal material of the invention, the first organic binder and the second organic binder desirably contain at least an acryl-based resin.

Since the acryl-based resin can easily adjust the glass transition temperature, it becomes easy to adjust the glass transition temperatures of the organic binders soaked into the first region and the second region.

In the holding seal material of the invention, a thickness of the holding seal material is desirably in a range of 2.0 mm to 20 mm.

When the thickness of the holding seal material is less than 2.0 mm, since the holding seal material is too thin, it becomes difficult to suppress the breakage of the exhaust gas treatment unit, and it becomes difficult to sufficiently suppress the leakage of exhaust gas between the exhaust gas treatment unit and the metal casing.

When the thickness of the holding seal material exceeds 20 mm, since the holding seal material is too thick, it becomes difficult to fill a gap due to the inside and outside circumference difference in the holding seal material wound around the exhaust gas treatment unit.

In the holding seal material of the invention, the holding seal material is desirably made of a single mat.

When the holding seal material is made of a single mat, there is no joining section joining mats unlike a holding seal material made of a laminate of two or more mats. Since there is no joining section, there are no mats rubbing each other in the joining section. Therefore, there is no concern of the inorganic fiber being broken due to the friction between the mats. In addition, when the holding seal material is made of a single mat, there is no concern that mats may peel from each other as in a holding seal material made of a laminate of two or more mats, and there is no concern that the respective mats may deviate from each other when using the holding seal material.

In addition, in the holding seal material of the invention, the holding seal material may be made of a laminate of two or more mats.

In the above-described holding seal material, it is possible to easily produce a holding seal material having a desired thickness by laminating an arbitrary number of mats having a predetermined thickness.

There is provided a manufacturing method for the mat-like holding seal material of the invention made of an inorganic fiber holding an exhaust gas treatment unit and being provided between the exhaust gas treatment unit and a metal casing housing the exhaust gas treatment unit, including a preparation step of preparing a mat-like holding seal material made of an inorganic fiber having a first principal surface and a second principal surface; a first organic binder soaking step of soaking a first organic binder into a first region with a predetermined thickness including the first principal surface; and a second organic binder soaking step of soaking a second organic binder having a lower glass transition temperature than a glass transition temperature of the first organic binder into a second region with a predetermined thickness including the second principal surface.

Using the manufacturing method for the holding seal material of the invention, it is possible to manufacture the holding seal material of the invention.

An exhaust gas purification apparatus of the invention includes an exhaust gas treatment unit; a metal casing housing the exhaust gas treatment unit; and a mat-like holding seal material made of an inorganic fiber holding the exhaust gas treatment unit and being provided between the exhaust gas treatment unit and the metal casing, in which the holding seal material includes a first principal surface and a second principal surface, the holding seal material includes a first region with a predetermined thickness including the first principal surface and a second region with a predetermined thickness including the second principal surface, the first region is soaked with a first organic binder, the second region is soaked with a second organic binder, a glass transition temperature of the first organic binder is higher than a glass transition temperature of the second organic binder, and the holding seal material is disposed so that the first principal surface is in contact with the exhaust gas treatment unit.

When exhaust gas is made to flow into the exhaust gas purification apparatus of the invention, the exhaust gas purification apparatus exhibits the following effects before the organic binders are burned.

In the holding seal material provided in the exhaust gas purification apparatus of the invention, the glass transition temperature of the first organic binder is higher than the glass transition temperature of the second organic binder. Generally, the glass transition temperature of a resin has a correlation with the hardness (softness) of the resin. That is, since the first organic binder soaked into the first region has a higher glass transition temperature than the second organic binder, a resin configuring the first organic binder is harder than a resin configuring the second organic binder. Therefore, the first region in the holding seal material of the invention soaked with the first organic binder is relatively harder than the second region in the holding seal material of the invention soaked with the second organic binder, and the second region is relatively softer than the first region. In the exhaust gas purification apparatus of the invention, the first principal surface of the holding seal material of the invention is in contact with the exhaust gas treatment unit. That is, the first principal surface of the holding seal material of the invention serves as an inside surface, and the second principal surface of the holding seal material of the invention serves as an outside surface. In a case in which the second region in the holding seal material is soaked with an organic binder having a high glass transition temperature such as the first organic binder, since the second region becomes hard, the second region does not become easily stretchable. Therefore, it becomes likely that a gap is generated between both end surfaces of the holding seal material wound around the exhaust gas treatment unit due to an inside and outside circumference difference of the holding seal material. However, in the holding seal material provided in the exhaust gas purification apparatus of the invention, since the second region is soaked with the second organic binder, the second region is flexible. Therefore, when manufacturing the exhaust gas purification apparatus of the invention, it is possible to wind the holding seal material of the invention around the exhaust gas treatment unit without generating a gap due to the inside and outside circumference difference. Therefore, in the exhaust gas purification apparatus of the invention, a gap due to the inside and outside circumference difference is not easily generated in the holding seal material wound around the exhaust gas treatment unit.

Furthermore, even when exhaust gas is made to flow into the exhaust gas purification apparatus, and the organic binders are burned, since the holding seal material receives pressure from the metal casing, there are no cases in which a gap is generated in the holding seal material of the invention wound around the exhaust gas treatment unit. Therefore, it is possible to prevent the leakage of exhaust gas.

### BRIEF DESCRIPTION OF THE DRAWINGS

Fig. 1 is across-sectional view schematically illustrating an example of an exhaust gas purification apparatus in which a holding seal material of the invention is used.
Fig. 2 is a perspective view schematically illustrating an example of the holding seal material of the invention.
Fig. 3 is a perspective view schematically illustrating an example of an exhaust gas treatment unit configuring the exhaust gas purification apparatus in which the holding seal material of the invention is used.
Fig. 4A is a perspective view of the exhaust gas treatment unit schematically illustrating an example of a state in which the holding seal material of the invention is wound around the exhaust gas treatment unit. Fig. 4B is an enlarged view of a part surrounded by a broken line in Fig. 4A seen from a direction in parallel with a longitudinal direction of the exhaust gas treatment unit.
Fig. 5 is a perspective view schematically illustrating an example of a step of housing the exhaust gas treatment unit around which the holding seal material of the invention is wound in a metal casing.
Figs. 6A and 6B are front views schematically illustrating an example of an order of a winding performance test of the holding seal material of the invention.
Fig. 7A is a perspective view schematically illustrating an example of a method of a shape-maintaining performance test of the holding seal material. Fig. 7B is a cross-sectional view of the schematic view of the shape-maintaining performance test illustrated in Fig. 7A taken along line A-A.
Fig. 8A is a perspective view schematically illustrating an example of a state in which a holding seal material of the related art is wound around an exhaust gas treatment unit. Fig. 8B is an enlarged view of a part surrounded by a broken line in Fig. 8A seen from a direction in parallel with the longitudinal direction of the exhaust gas treatment unit.

### DETAILED DESCRIPTION OF THE INVENTION

### (Detailed description of the invention)

Hereinafter, the invention will be specifically described. However, the invention is not limited to the following description, and the invention can be appropriately modified and applied within the scope of the purpose of the invention.

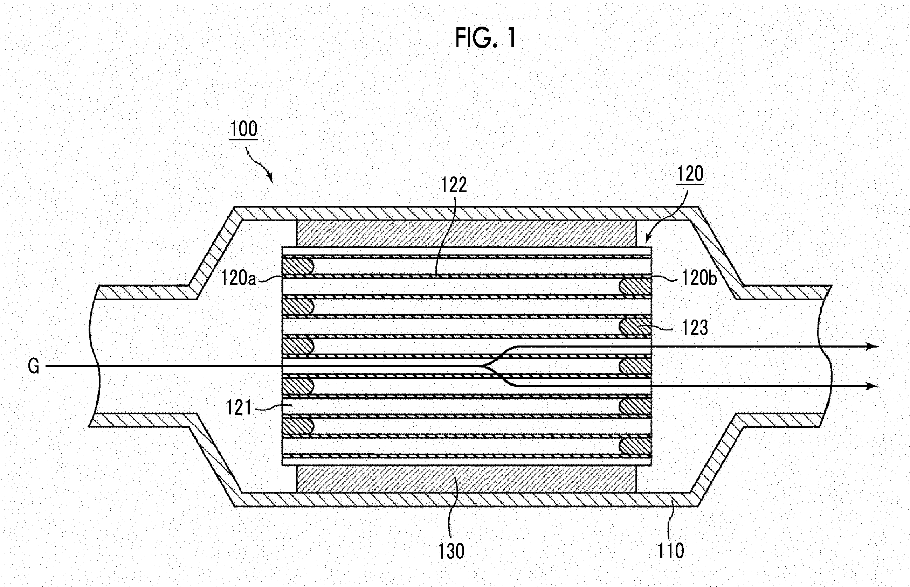

Fig. 1 is a cross-sectional view schematically illustrating an example of an exhaust gas purification apparatus in which a holding seal material of the invention is used. An exhaust gas purification apparatus 100 in which a holding seal material 130 that is the holding seal material of the invention illustrated in Fig. 1 is used includes a metal casing 110, an exhaust gas treatment unit 120 housed in the metal casing 110, and the holding seal material 130 provided between the exhaust gas treatment unit 120 and the metal casing 110.

The exhaust gas treatment unit 120 is a columnar unit having a number of cells 121 provided in a longitudinal direction with a cell wall 122 therebetween. Meanwhile, an introduction tube through which exhaust gas discharged from an internal-combustion engine is introduced and a discharge tube through which exhaust gas that has passed through the exhaust gas purification apparatus 100 is discharged outside are connected to an end section of the metal casing 110 as necessary.

In addition, the exhaust gas purification apparatus 100 is an example of the exhaust gas purification apparatus of the invention.

Meanwhile, in the exhaust gas purification apparatus 100 illustrated in Fig. 1, an exhaust gas filter (honeycomb filter) having cells blocked with a sealing material 123 at any one end is used as the exhaust gas treatment unit 120.

Hereinafter, a case in which exhaust gas passes through the exhaust gas purification apparatus 100 having the above-described configuration will be described with reference to Fig. 1.

As illustrated in Fig. 1, exhaust gas that has been discharged from an internal-combustion engine and has flowed into the exhaust gas purification apparatus 100 (in Fig. 1, the exhaust gas is represented by G, and the flow of the exhaust gas is indicated by an arrow) flows into one cell 121 opened on an exhaust gas inflow-side end surface 120a of the exhaust gas treatment unit 120, and passes through the cell wall 122 separating the cell 121. In this case, PM in the exhaust gas is trapped in the cell wall 122 so as to purify the exhaust gas. The purified exhaust gas flows out through other cells 121 opened on an exhaust gas outflow-side end surface 120b, and is discharged outside.

Next, the holding seal material 130 of the invention will be described.

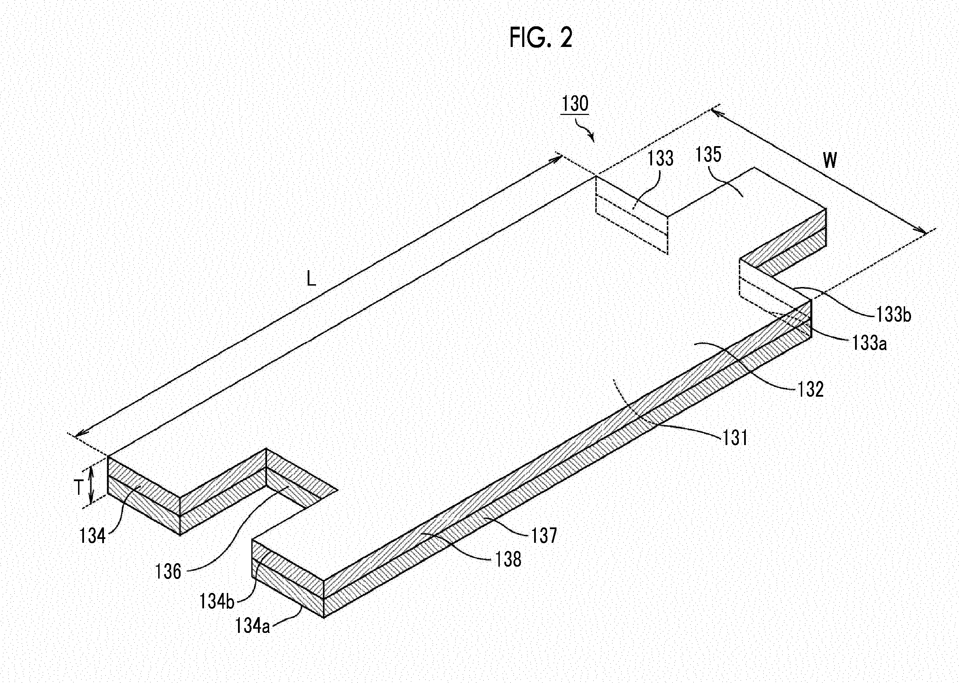

Fig. 2 is a perspective view schematically illustrating an example of the holding seal material of the invention.

The holding seal material 130 illustrated in Fig. 2 has a predetermined longitudinal direction length (indicated by arrow L in Fig. 2), a predetermined width (indicated by arrow W in Fig. 2) and a predetermined thickness (indicated by arrow T in Fig. 2), and is a mat with a substantially rectangular plate shape in a planar view made of an inorganic fiber. In addition, the holding seal material 130 includes a first principal surface 131 and a second principal surface 132 that is a principal surface on the opposite side to the first principal surface 131. The holding seal material 130 of the invention is wound around the exhaust gas treatment unit 120 so as to bring the first principal surface 131 of the holding seal material 130 into contact with the exhaust gas treatment unit 120. Furthermore, the holding seal material 130 is provided so as to bring the second principal surface 132 into contact with the metal casing 110.

In the holding seal material 130 illustrated in Fig. 2, a protrusion section 135 is formed on a first end surface 133 that is one of end surfaces of the holding seal material 130 in the longitudinal direction, and a recess section 136 is formed on a second end surface 134 that is the other end surface. The protrusion section 135 and the recess section 136 of the holding seal material 130 have shapes so that both sections are tightly fit together when winding the holding seal material 130 around an exhaust gas treatment unit 120 to assemble an exhaust gas purification apparatus 100 described below.

The holding seal material 130 illustrated in Fig. 2 has a predetermined thickness T. The orientation of the thickness T of the holding seal material 130 is in a direction perpendicular to the first principal surface 131 and the secondprincipal surface 132.

The holding seal material 130 illustrated in Fig. 2 has a first region 137 having a predetermined thickness and including the first principal surface 131 and a second region 138 having a predetermined thickness and including the second principal surface 132.

The length of the first region 137 in the thickness direction is not particularly limited, but is desirably set to 1/2 or less, and more desirably set in a range of 1/5 to 1/3 of the thickness T of the holding seal material 130.

When the length of the first region 137 in the thickness direction is within the above-described range, the first region 137 soaked with the first organic binder described below becomes sufficiently hard. Therefore, it is possible to efficiently handle the holding seal material 130.

The length of the second region 138 in the thickness direction is not particularly limited, but is desirably set to 1/2 or less, and more desirably set in a range of 1/5 to 1/3 of the thickness T of the holding seal material 130.

When the length of the second region 138 in the thickness direction is within the above-described range, the second region soaked with the second organic binder described below is sufficiently flexible. Therefore, it is possible to sufficiently stretch the second region 138 in the longitudinal direction of the holding seal material 130. Therefore, a gap section due to the inside and outside circumference difference is not easily generated in the holding seal material 130 wound around the exhaust gas treatment unit 120.

The first region 137 is soaked with the first organic binder, and the second region 138 is soaked with the second organic binder. The glass transition temperature of the first organic binder is higher than the glass transition temperature of the second organic binder.

The first organic binder is desirably cured and is in a glass state lacking fluidity. When the temperature of the organic binder is lower than the glass transition temperature of the organic binder, the organic binder is likely to be in a glass state. When the first organic binder is in a glass state, the first region 137 in the holding seal material 130 becomes sufficiently hard. Therefore, it is possible to efficiently handle the holding seal material.

The second organic binder is desirably softened and is in a rubber state having rich fluidity and viscosity. When the temperature of the organic binder is equal to or higher than the glass transition temperature of the organic binder, the organic binder is likely to be in a rubber state. When the second organic binder is in a rubber state, it is possible to adhere the inorganic fiber segments together using the second organic binder in the second region 138 in the holding seal material 130. In addition, since the second organic binder is richly flexible, the inorganic fiber segments adhered to the second organic binder can move and aresufficientlyflexible. Therefore, it is possible to stretch the second region 138 in the longitudinal direction of the holding seal material 130. Therefore, in the holding seal material wound around the exhaust gas treatment unit, it is more difficult for a gap to be generated due to the inside and outside circumference difference.

In addition, since the second organic binder adheres the inorganic fiber segments together, it is possible to further prevent the inorganic fiber segments from scattering from the second principal surface 132 of the holding seal material 130.

The glass transition temperature of the first organic binder is not particularly limited, but is desirably in a range of 5°C to 50°C, and more desirably in a range of 25°C to 50°C.

When the glass transition temperature of the first organic binder is within the above-described range, the first organic binder is in a glass state at room temperature. Therefore, it is possible to obtain an effect produced by the first organic binder in a glass state.

The glass transition temperature of the second organic binder is not particularly limited, but is desirably in a range of -50°C to lower than 5°C, and more desirably in a range of -10°C to lower than 5°C.

When the glass transition temperature of the second organic binder is within the above-described range, the second organic binder is in a rubber state at room temperature. Therefore, it is possible to obtain an effect of the second organic binder in a rubber state.

In the holding seal material 130 of the invention, the soaked amount of the first organic binder is not particularly limited, but is desirably in a range of 0.2 parts by weight to 12.0 parts by weight with respect to a weight of 100 parts by weight of the holding seal material 130.

When the soaked amount of the first organic binder is less than 0.2 parts by weight, since the adhering force of the first organic binder to adhere the inorganic fiber segments becomes weak, it becomes difficult to prevent the scattering of the inorganic fiber segments. In addition, it is not possible to sufficiently harden the first region 137. Therefore, it becomes difficult to efficiently handle the holding seal material.

When the soaked amount of the first organic binder exceeds 12.0 parts by weight, the first region 137 becomes too hard. When the holding seal material 130 in the above-described state is wound around the exhaust gas treatment unit 120, it becomes likely that fissures or cracks are generated in the holding seal material 130.

In the holding seal material 130 of the invention, the soaked amount of the second organic binder is not particularly limited, but is desirably in a range of 0.2 parts by weight to 12.0 parts by weight with respect to a weight of 100 parts by weight of the holding seal material 130.

When the soaked amount of the second organic binder is less than 0.2 parts by weight, since the adhering force of the second organic binder to adhere the inorganic fiber segments becomes weak, it becomes difficult to prevent the scattering of the inorganic fiber segments.

When the soaked amount of the second organic binder exceeds 12.0 parts by weight, the second region 138 loses flexibility. When the holding seal material 130 in the above-described state is wound around the exhaust gas treatment unit 120, it becomes likely that a gap is generated in the holding seal material 130.

In the holding seal material 130 of the invention, the total weight of the first organic binder and the second organic binder is desirably in a range of 0.5 parts by weight to 3.0 parts by weight with respect to a weight of 100 parts by weight of the holding seal material 130.

When the total weight of the first organic binder and the second organic binder is 0.5 parts by weight or more with respect to a weight of 100 parts by weight of the holding seal material, since the adhering force of the organic binders to adhere the inorganic fiber segments becomes sufficiently strong, it is possible to prevent the scattering of the inorganic fiber segments. In addition, since the organic binders sufficiently adhere the inorganic binder segments together, it is possible to decrease the bulk of the holding seal material to an appropriate extent. Therefore, it becomes easy to press the exhaust gas treatment unit 120 around which the holding seal material 130 is wound into the metal casing 110.

When exhaust gas is made to flow into the exhaust gas purification apparatus 100 in which the holding seal material 130 of the invention is used, the organic binders are decomposed and burned due to the heat of exhaust gas. When the organic binders are burned, harmful gas of non-methane hydrocarbon, nitrogen oxide and the like is generated. When the total weight of the first organic binder and the second organic binder is 3.0 parts by weight or less with respect to a weight of 100 parts by weight of the holding seal material 130, it is possible to sufficiently reduce the generation of the above-described gas.

The first organic binder soaked into the first region 137 and the second organic binder soaked into the second region 138 are desirably a thermoplastic resin. Specific examples thereof include an acryl-based resin, a polyethylene-based resin, a polypropylene-based resin, a polyvinyl chloride-based resin, a polystyrene-based resin, a rubber-based resin and the like, and it is also preferable to contain two or more resins. Among the above-described resins, an acryl-based resin is desirable, and acryl rubber is more desirable.

Since the acryl-based resin can easily adjust the glass transition temperature, it becomes easy to adjust the glass transition temperatures of the organic binders soaked into the first region 137 and the second region 138.

The thickness of the holding seal material 130 is not particularly limited, but is desirably in a range of 2.0 mm to 20 mm.

When the thickness of the holding seal material 130 is less than 2.0 mm, the surface pressure of the holding seal material 130 does not become sufficient to hold the exhaust gas treatment unit 120. Therefore, the exhaust gas treatment unit 120 becomes likely to drop. In addition, when the volume of the exhaust gas treatment unit 120 is changed, it becomes difficult for the holding seal material 130 to absorb the volume change of the exhaust gas treatment unit 120. Therefore, it becomes likely that cracks and the like are generated in the exhaust gas treatment unit 120. That is, since the holding seal material 130 is too thin, it becomes difficult to suppress the breakage of the exhaust gas treatment unit 120. In addition, it becomes difficult to sufficiently suppress the leakage of exhaust gas between the exhaust gas treatment unit 120 and the metal casing 110.

When the thickness of the holding seal material 130 exceeds 20 mm, since the holding seal material 130 loses flexibility, it becomes difficult to handle the holding seal material 130 wound around the exhaust gas treatment unit 120. In addition, it becomes likely that wrinkles or breakage occurs in the holding seal material 130 due to winding. In addition, since the holding seal material 130 is too thick, it becomes difficult to fill a gap due to the inside and outside circumference difference in the holding seal material 130 wound around the exhaust gas treatment unit 120.

The holding seal material 130 may be made of a single mat or a laminate of two or more mats, but is particularly desirably made of a single mat.

When the holding seal material 130 is made of a single mat, there is no joining section joining mats unlike a holding seal material made of a laminate of two or more mats. Since there is no joining section, there are no mats rubbing each other in the joining section. Therefore, there is no concern of the inorganic fiber being broken due to the friction between the mats. In addition, when the holding seal material is made of a single mat, there is no concern that mats may peel from each other as in a holding seal material made of a laminate of two or more mats, and there is no concern that the respective mats may deviate from each other when using the holding seal material.

The inorganic fiber contained in the holding seal material 130 is not particularly limited, and is desirably made of at least one selected from a group consisting of alumina, silica, alumina-silica and mullite. The component material may vary depending on characteristics and the like required for the holding seal material such as thermal resistance or wind erosion resistance.

Among the above-described materials, a low-crystallinity alumina inorganic fiber is desirable, and a low-crystallinity alumina inorganic fiber having a mullite composition is more desirable.

In a case in which alumina is used as the inorganic fiber configuring the holding seal material 130, the inorganic fiber may further contain, for example, additives such as CaO, MgO and ZrO₂ in addition to alumina.

In addition, in a case in which silica is used, the inorganic fiber may contain, for example, additives such as CaO, MgO and ZrO₂ in addition to silica.

Furthermore, in a case in which alumina-silica is used, the composition ratio thereof is desirably in a range of 60:40 to 80:20 (Al₂O₃:SiO₂), and more desirably in a range of 70:30 to 74:26 (Al₂O₃:SiO₂) in terms of weight ratio.

The average fiber length of the inorganic fiber configuring the holding seal material 130 is desirably in a range of 5 mm to 150 mm, and more desirably in a range of 10 mm to 80 mm.

When the average fiber length of the inorganic fiber is less than 5 mm, since the fiber length of the inorganic fiber is too short, the inorganic fiber segments are not sufficiently interwoven, and the shear strength of the holding seal material 130 becomes low. In addition, when the average fiber length of the inorganic fiber exceeds 150 mm, since the fiber length of the inorganic fiber is too long, it becomes more difficult to handle the inorganic fiber when manufacturing the holding seal material 130. As a result, it becomes more difficult to wind the holding seal material around the exhaust gas treatment unit 120, and the holding seal material 130 becomes more breakable.

The average fiber diameter of the inorganic fiber configuring the holding seal material 130 is desirably in a range of 1 µm to 20 µm, and more desirably in a range of 3 µm to 10 µm.

When the average fiber diameter of the inorganic fiber is in a range of 1 µm to 20 µm, the strength and flexibility of the inorganic fiber become sufficiently high, and it is possible to improve the shear strength of the holding seal material 130.

When the average fiber diameter of the inorganic fiber is less than 1 µm, since the inorganic fiber is thin and easily breakable, the tensile strength of the inorganic fiber becomes insufficient. On the other hand, when the average fiber diameter of the inorganic fiber exceeds 20 µm, since the inorganic fiber is not easily bent, the flexibility becomes insufficient.

The basis weight (weight per unit area) of the holding seal material 130 is not particularly limited, but is desirably in a range of 200 g/m² to 4000 g/m², and more desirably in a range of 1000 g/m² to 3000 g/m². When the basis weight of the holding seal material 130 is less than 200 g/m², the holding force is not sufficient, and, when the basis weight of the holding seal material 130 exceeds 4000 g/m², it is difficult to make the bulk of the holding seal material 130 small. Therefore, in a case in which the exhaust gas purification apparatus 100 is manufactured using the above-described holding seal material 130, the exhaust gas treatment unit 120 is likely to drop.

In addition, the bulk density (bulk density of the holding seal material before being wound) of the holding seal material 130 is not particularly limited, but is desirably in a range of 0.10 g/cm³ to 0.30 g/cm³. When the bulk density of the holding seal material 130 is less than 0.10 g/cm³, since the entanglement of the inorganic fiber is weak, and the inorganic fiber is easily detachable, it becomes difficult to maintain the shape of the holding seal material 130 in a predetermined shape.

In addition, when the bulk density of the holding seal material 130 exceeds 0.30 g/cm³, the holding seal material 130 becomes hard such that it becomes more difficult to wind the holding seal material around the exhaust gas treatment unit 120, and the holding seal material 130 becomes more breakable.

Next, the exhaust gas treatment unit 120 configuring the exhaust gas purification apparatus 100 in which the holding seal material 130 of the invention is used will be described.

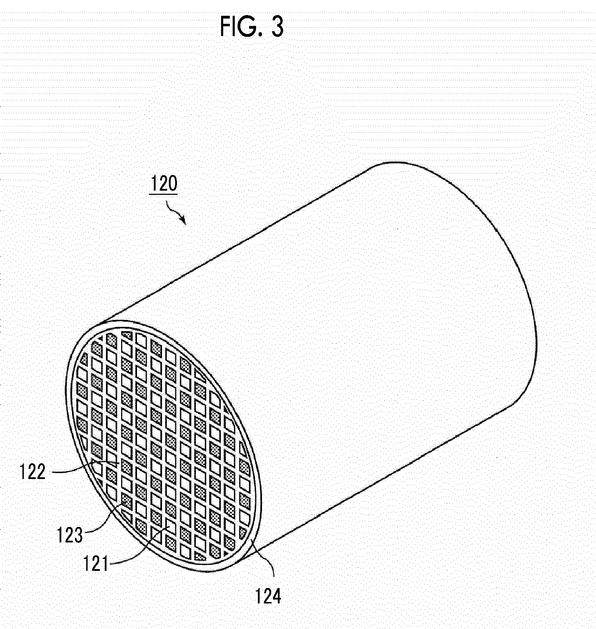

Fig. 3 is a perspective view schematically illustrating an example of the exhaust gas treatment unit configuring the exhaust gas purification apparatus in which the holding seal material of the invention is used.

As illustrated in Fig. 3, the exhaust gas treatment unit 120 is made mainly of a porous ceramic, and has a substantially cylindrical shape. In addition, an outside circumference-coating layer 124 is provided on the outside circumference of the exhaust gas treatment unit 120 for the purpose of reinforcing the outside circumferential section of the exhaust gas treatment unit 120, trimming the shape or improving the heat-insulating properties of the exhaust gas treatment unit 120.

Meanwhile, the configuration of the inside of the exhaust gas treatment unit 120 is as already described in the description of the exhaust gas purification apparatus 100 of the invention (refer to Fig. 1).

The exhaust gas treatment unit 120 may be made of a porous non-oxide ceramic such as silicon carbide or silicon nitride, or may be made of a porous ceramic oxide such as sialon, alumina, cordierite or mullite. Among the above-described materials, silicon carbide is desirable.

In a case in which the exhaust gas treatment unit 120 is made of a porous silicon carbide ceramic, the porosity of the porous ceramic is not particularly limited, but is desirably in a range of 35% to 60%.

This is because, when the porosity is less than 35%, there is a case in which the exhaust gas treatment unit is immediately clogged, and, on the other hand, when the porosity exceeds 60%, there is a case in which the strength of the exhaust gas treatment unit decreases and the exhaust gas treatment unit is easilybroken.

In addition, the average pore diameter of the porous ceramic is desirably in a range of 5 µm to 30 µm.

This is because, when the average pore diameter is less than 5 µm, there is a case in which PM easily causes clogging, and, on the other hand, when the average pore diameter exceeds 30 µm, PM passes through pores, it is not possible to trap PM and there is a case in which the exhaust gas treatment unit cannot function as a filter.

Meanwhile, the porosity and pore diameter can be measured using a well-known measurement method of the related art using a scanning electron microscope (SEM).

The cell density in a cross-section of the exhaust gas treatment unit 120 is not particularly limited, but a desirable lower limit is 31.0 cells/cm² (200 cells/inch²), a desirable upper limit is 93.0 cells/cm² (600 cells/inch²), a more desirable lower limit is 38.8 cells/cm² (250 cells/inch²), and a more desirable upper limit is 77.5 cells/cm² (500 cells/inch²).

The exhaust gas treatment unit 120 may carry a catalyst for purifying exhaust gas, and, for example, a noble metal such as platinum, palladium or rhodium is desirable as the carried catalyst, and platinum is more desirable among the above-described noble metals. In addition, as other catalysts, it is also possible to use, for example, an alkali metal such as potassium or sodium and an alkali earth metal such as barium. The above-described catalyst may be solely used, or two or more thereof may be jointly used.

When the above-described catalyst is carried, it becomes easy to remove PM through combustion and it also becomes possible to purify harmful exhaust gas.

Next, a state in which the holding seal material 130 of the invention is wound around the exhaust gas treatment unit 120 will be described.

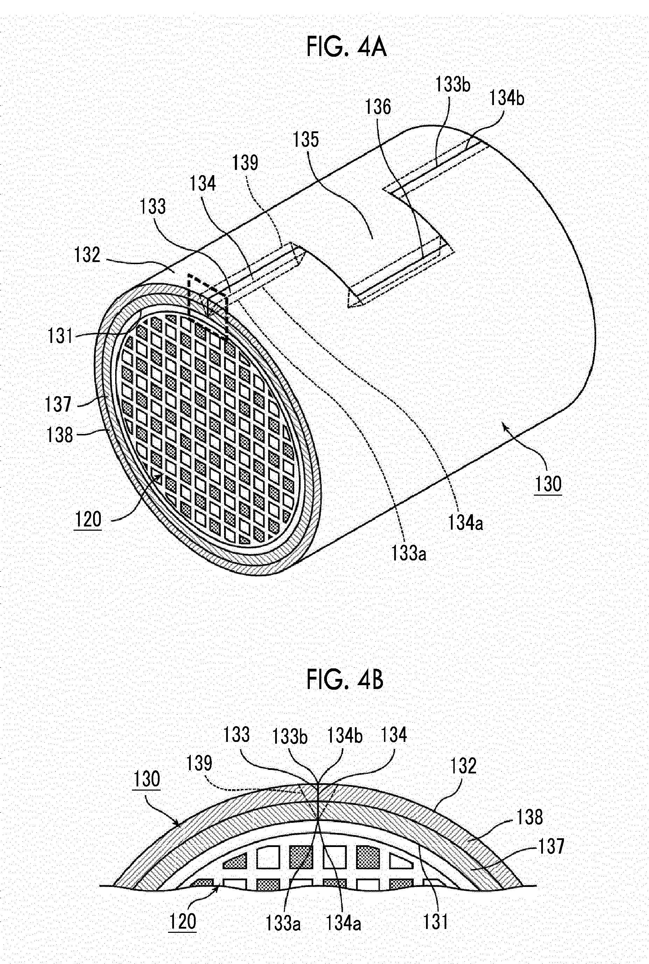

Fig. 4A is a perspective view of the exhaust gas treatment unit schematically illustrating an example of a state in which the holding seal material of the invention is wound around the exhaust gas treatment unit. Fig. 4B is an enlarged view of a part surrounded by a broken line in Fig. 4A seen from a direction in parallel with the longitudinal direction of the exhaust gas treatment unit.

In Figs. 4A and 4B, the holding seal material 130 is wound around the exhaust gas treatment unit 120 so as to bring the first principal surface 131 of the holding seal material 130 into contact with the exhaust gas treatment unit 120.

In Figs. 4A and 4B, a side 133a formed by the first principal surface 131 and the first end surface 133 of the holding seal material 130 and a side 134a formed by the first principal surface 131 and the second end surface 134 of the holding seal material 130 are in contact with each other.

Since the holding seal material 130 has the thickness T, when the holding seal material 130 is wound around the exhaust gas treatment unit 120, the inside and outside circumference difference is generated. Since the length of the first principal surface 131 in the longitudinal direction and the length of the second principal surface 132 in the longitudinal direction are substantially the same, a gap is generated between the first end surface 133 and the second end surface 134 without a side 133b formed by the second principal surface 132 and the first end surface 133 of the holding seal material 130 and a side 134b formed by the second principal surface 132 and the second end surface 134 of the holding seal material 130 coming into contact with each other.

However, since the second region 138 in the holding seal material 130 is soaked with the second organic binder as described above, the second region is sufficiently flexible. Therefore, the gap generated between the first end surface 133 and the second end surface 134 can be filled using a stretched section 139 formed by stretching the second region 138 in the holding seal material 130.

Next, the metal casing 110 configuring the exhaust gas purification apparatus 100 in which the holding seal material 130 of the invention is used will be described.

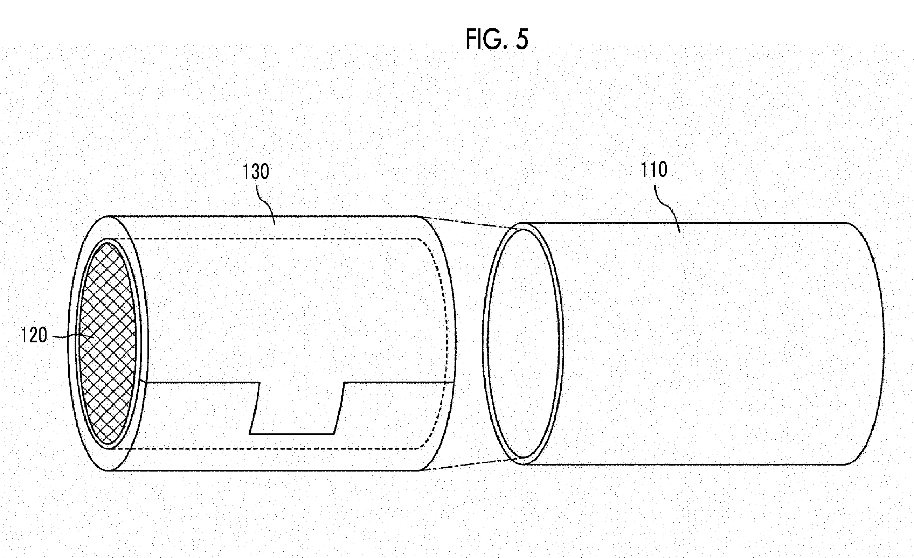

Fig. 5 is a perspective view schematically illustrating an example of a step of housing the exhaust gas treatment unit around which the holding seal material of the invention is wound in a metal casing.

The metal casing 110 is made mainly of metal such as stainless steel, and the shape of the metal casing may be a substantially cylindrical shape having smaller inner diameters at both end sections than an inner diameter in the center as illustrated in Fig. 1, or a substantially cylindrical shape having a constant inner diameter as illustrated in Fig. 5.

The inner diameter of the metal casing 110 (the inner diameter at a part at which the exhaust gas treatment unit is housed) is desirably slightly smaller than the total length of the diameter of the end surface of the exhaust gas treatment unit 120 and the thickness of the holding seal material 130 wound around the exhaust gas treatment unit 120.

When the ordinary exhaust gas treatment unit 220 around which the holding seal material 230 of the related art is wound as illustrated in Fig. 8A is housed in the above-described metal casing 110, the gap section 239 remains unchanged. Therefore, when exhaust gas is made to flow into the exhaust gas purification apparatus of the related art, it becomes likely that gas leaks through the gap section 239.

On the other hand, when the exhaust gas treatment unit 120 around which the holding seal material 130 of the invention is wound is housed in the metal casing 110, since the holding seal material 130 receives pressure from the metal casing 110, the stretched section 139 does not easily contract. Therefore, it becomes difficult for a gap to be generated in a fitting section of the holding seal material 130. Therefore, even when exhaust gas is made to flow into the exhaust gas purification apparatus 100 of the invention and the organic binder is burned, there are no cases in which a gap is generated between the first end surface 133 and the second end surface 134 of the holding seal material 130 wound around the exhaust gas treatment unit 120. Therefore, it is possible to prevent the leakage of exhaust gas.

Subsequently, an example of a manufacturing method for the holding seal material 130 of the invention and the exhaust gas purification apparatus 100 of the invention will be described.

The manufacturing method for the holding seal material 130 of the invention includes a preparation step of preparing a mat-like holding seal material made of an inorganic fiber having a first principal surface and a second principal surface, a first organic binder soaking step of soaking a first organic binder into a first region with a predetermined thickness including the first principal surface, and a second organic binder soaking step of soaking a second organic binder having a lower glass transition temperature than a glass transition temperature of the first organic binder into a second region with a predetermined thickness including the second principal surface.

### (a) Preparation step of the holding seal material

### (a-1) Mat preparation step

First, a mat preparation step of preparing a mat for the holding seal material made of an inorganic fiber on which a needle punching treatment has been carried out is carried out.

The mat for the holding seal material can be obtained using a variety of methods, and can be manufactured using, for example, the following method. That is, first, for example, a mixture for fiber spinning made of an aqueous solution of basic aluminum chloride, silica sol and the like as raw materials is spun using a blowing method so as to produce an inorganic fiber precursor having an average fiber diameter in a range of 3 µm to 10 µm. Subsequently,a continuoussheet-like body having a predetermined size is produced by compressing the inorganic fiber precursor, and is subjected to a needle punching treatment and then a firing treatment, thereby completing the preparation of the mat for the holding seal material.

### (a-2) Organic binder soaking step

Next, an organic binder soaking step of soaking the first organic binder into the first region with a predetermined thickness including the first principal surface and soaking the second organic binder into the second region with a predetermined thickness including the second principal surface is carried out.

Regarding the kinds of the organic binders used in the soaking step, the kinds of the organic binders are not particularly limited as long as the glass transition temperature of the second organic binder is lower than the glass transition temperature of the first organic binder, but the glass transition temperature of the first organic binder is desirably in a range of 5°C to 50°C, and the glass transition temperature of the second organic binder is desirably in a range of -50°C to lower than 5°C.

A method for soaking the organic binders into the respective principal surfaces of the mat is not particularly limited, and it is possible to use a spray coating method in which an emulsion obtained by dispersing the organic binder in water is blown through spraying.

Regarding the soaked amounts of the organic binders, when a drying step (a-3) described below ends, it is desirable that the soaked amount of the first organic binder be adjusted so as to be in a range of 0.2 parts by mass to 12.0 parts by mass with respect to 100 parts by mass of the holding seal material, and the soaked amount of the second organic binder be adjusted so as to be in a range of 0.2 parts by mass to 12.0 parts by mass with respect to 100 parts by mass of the holding seal material.

### (a-3) Drying step

After that, a drying step of drying the organic binder-soaked mat at a temperature in a range of approximately 110°C to 140°C is carried out so as to evaporate moisture, thereby producing an organic binder-attached mat.

As a drying method, it is possible to use heating and hot air drying.

After the above-described steps, the mat becomes the holding seal material 130 that is an example of the holding seal material of the invention.

The above-described preparation step (a) of the holding seal material may include a step of attaching an inorganic binder to the inorganic fiber.

The method and order for attaching the inorganic binder to the inorganic fiber are not particularly limited, and, for example, it is possible to immerse the mat in a solution containing the inorganic binder after the mat preparation step (a-1) so as to soak the inorganic binder into the mat, or to drop the inorganic binder onto the mat using a curtain coating method or the like so as to soak the inorganic binder into the mat. After that, it is possible to adjust the attached amount of the inorganic binder by suctioning and dehydrating the inorganic binder-attached mat.

Next, an example of a method for manufacturing the exhaust gas purification apparatus 100 of the invention using the holding seal material 130 will be described.

A manufacturing method for the exhaust gas purification apparatus 100 of the invention includes a winding step of winding the holding seal material 130 of the invention around the exhaust gas treatment unit 120 and a housing step of housing the exhaust gas treatment unit 120 around which the holding seal material 130 of the invention is wound inside the metal casing 110, in which the winding step includes a step of winding the holding seal material 130 of the invention so as to bring the first principal surface 131 of the holding seal material 130 into contact with the exhaust gas treatment unit 120.

### (b) Winding step

A winding step of producing a wound body (the exhaust gas treatment unit 120 around which the holding seal material 130 is wound) by winding the holding seal material 130 of the invention produced in the preparation step (a) of the holding seal material around the exhaust gas treatment unit 120 is carried out.

In the winding step, the holding seal material 130 of the invention is wound around the substantially columnar exhaust gas treatment unit 120 produced using a well-known method of the related art so as to bring the first principal surface 131 of the holding seal material 130 of the invention into contact with the exhaust gas treatment unit 120. In this case, the holding seal material is wound so that the second region 138 in the holding seal material 130 of the invention is stretched so as to prevent a gap from being generated in the fitting sectionof the holding seal material 130 of the invention.

When winding the holding seal material 130 of the invention around the exhaust gas treatment unit 120, the holding seal material 130 of the invention may be fixed to the exhaust gas treatment unit 120 using adhesive tape or the like.

### (c) Housing step

Next, a housing step of housing the produced wound body inside a metal casing being made mainly of metal or the like and having a substantially cylindrical shape with a predetermined size is carried out.

The inner diameter of the metal casing is slightly smaller than the outermost diameter of the wound body so that the housed holding seal material is compressed so as to exert a predetermined repulsive force (that is, a force that holds the exhaust gas treatment unit).

Regarding the housing step, examples of a method for housing the wound body inside the metal casing include a press-in method (stuffing method) in which the wound body is pressed in up to a predetermined location inside the metal casing, a sizing method (swaging method) in which the wound body is inserted into the metal casing and then the metal casing is compressed from the outer circumferential side so as to decrease the inner diameter of the metal casing, and a clam shell method in which the metal casing is provided with a shape capable of being divided into two components of a first metal casing and a second metal casing, the wound body is mounted on the first metal casing, and then the second casing is superimposed, thereby sealing the metal casing, and the like.

The exhaust gas purification apparatus 100 that is an example of the exhaust gas purification apparatus of the invention can be manufactured using the above-described method.

The holding seal material and exhaust gas purification apparatus of the invention may have the following characteristics.

In the holding seal material of the invention, the holding seal material may be made of a laminate of two or more mats.

In the above-described holding seal material, it is possible to easily produce a holding seal material having a desired thickness by laminating an arbitrary number of mats having a predetermined thickness.

In a case in which the holding seal material of the invention is made of a laminate of two or more mats, when preparing the holding seal material, the first region and the second region in the holding seal material respectively made of a laminate of two or more mats may be soaked with the first organic binder and the second organic binder using the same method as the preparation step (a) of the holding seal material described in the manufacturing method for the holding seal material 130 of the invention after laminating two or more mats.

In addition, in a case in which the holding seal material of the invention is made of a laminate of two or more mats, the respective organic binders may be soaked using the following method.

When laminating two or more mats, it is also possible to fully soak the first organic binder into the respective mats forming a part that serves as the first region in the holding seal material, fully soak the second organic binder into the respective mats forming a part that serves as the second region in the holding seal material, and then laminate the respective mats.

Examples of a method for soaking the organic binder into the respective mats include a method in which mats are immersed in a solution containing the organic binder.

In a case in which the holding seal material of the invention is made of a laminate of two or more mats, examples of a method for laminating the mats include joining using thread stitching or adhesive tape, adhesion using an adhesive, and the like.

Thus far, an integrated exhaust gas treatment unit has been described as the exhaust gas treatment unit, but the exhaust gas treatment unit configuring the exhaust gas purification apparatus of the invention may be a combined exhaust gas treatment unit obtained by uniting a plurality of units through an adhesive layer.

Thus far, a filter having cells sealed at any one end sections has been described as the exhaust gas treatment unit, but the exhaust gas treatment unit configuring the exhaust gas purification apparatus of the invention may have cells not sealed at end sections. The above-described exhaust gas treatment unit can be preferably used as a catalyst carrier.

The shape of the exhaust gas treatment unit configuring the exhaust gas purification apparatus of the invention is not limited to a cylindrical shape, and may be an arbitrary shape, for example, an oval columnar shape or a square columnar shape.

Hereinafter, the actions of the holding seal material of the invention will be listed.
(1) When exhaust gas is made to flow into the exhaust gas purification apparatus in which the holding seal material of the invention is used, the holding seal material of the invention exhibits the following effects before the organic binders are burned.

In the holding seal material of the invention, the glass transition temperature of the first organic binder is higher than the glass transition temperature of the second organic binder. Therefore, the first region in the holding seal material of the invention soaked with the first organic binder is relatively harder than the second region in the holding seal material of the invention soaked with the second organic binder, and the second region is relatively softer than the first region. In the exhaust gas purification apparatus in which the holding seal material of the invention is used, the first principal surface of the holding seal material of the invention is in contact with the exhaust gas treatment unit. That is, the first principal surface of the holding seal material of the invention serves as an inside surface, and the second principal surface of the holding seal material of the invention serves as an outside surface. In the holding seal material of the invention, since the second region is soaked with the second organic binder, the second region is flexible. Therefore, when manufacturing the exhaust gas purification apparatus, it is possible to wind the holding seal material around the exhaust gas treatment unit without generating a gap due to the inside and outside circumference difference. Therefore, even when the holding seal material of the invention is wound around the exhaust gas treatment unit, a gap due to the inside and outside circumference difference is not easily generated in the holding seal material of the invention.
(2) Even when exhaust gas is made to flow into the exhaust gas purification apparatus in which the holding seal material of the invention is used, and the organic binders are burned, since the holding seal material of the invention receives pressure from the metal casing, there are no cases in which a gap is generated in the holding seal material of the invention wound around the exhaust gas treatment unit. Therefore, it is possible to prevent the leakage of exhaust gas.
(3) The first region in the holding seal material of the invention has been cured more than the second region in the holding seal material of the invention. Therefore, there are no cases in which the holding seal material of the invention is hung when being transported or arrayed. Therefore, it is possible to efficiently handle the holding seal material of the invention. In addition, when manufacturing an exhaust gas purification apparatus using the holding seal material of the invention, there are no cases in which the holding seal material of the invention is broken even when handled somewhat wildly.
(4) In the holding seal material of the invention, the first region and the second region are soaked with the organic binders. Since the organic binders adhere inorganic fiber segments together, it is possible to prevent the inorganic fiber segments from protruding or scattering from the first principal surface and the second principal surface of the holding seal material of the invention when manufacturing the exhaust gas purification apparatus.

### [Examples]

Hereinafter, examples disclosing the invention more specifically will be described. Meanwhile, the invention is not limited to the examples.

### (Example 1)

### (a) Holding seal material preparation step

### (a-1) Mat preparation step

First, a mat for the holding seal material was prepared in the following order.

### (1) Spinning step

Silica sol was blended with a basic aqueous solution of aluminum chloride which had an Al content of 70 g/l and was prepared so as to obtain Al:Cl=1:1.8 (atomic ratio) so that the composition ratio in the inorganic fiber after firing became Al₂O₃: SiO₂=72 : 28 (weight ratio), and furthermore, an appropriate amount of an organic polymer (polyvinyl alcohol) was added, thereby preparing a liquid mixture.

The obtained liquid mixture was condensed so as to produce a spinning mixture, and the spinning mixture was spun using a blowing method so as to produce an inorganic fiber precursor having an average fiber diameter of 5.1 µm.

### (2) Compression step

The inorganic fiber precursor obtained in the above-described spinning step (1) was compressed, thereby producing a continuous sheet-like body.

### (3) Needle punching step

A needle punching treatment was continuously carried out on the sheet-like body obtained in the above-described compression step (2) using conditions described below, thereby producing a needle-punching-treated body.

First, a needle board provided with needles at a density of 21 needles/cm² was prepared. Next, the needle board was disposed above one surface of the sheet-like body, and a needle punching treatment was carried out by dropping and lifting the needle board once in the thickness direction of the sheet-like body, thereby producing a needle-punching-treated body. In this case, the needles were dropped until barbs formed at front end sections of the needles completely penetrate the opposite surface of the sheet-like body.

### (4) Firing step

The needle-punching-treated body obtained in the above-described needle punching step (3) was continuously fired at a peak temperature of 1250°C, and a fired sheet-like body made of an inorganic fiber containing alumina and silica at 72 parts by weight: 28 parts by weight was manufactured. The average fiber diameter of the inorganic fiber was 5.1 µm, and the minimum value of the inorganic fiber diameter was 3.2 µm. The inorganic fiber obtained in the above-described manner had a bulk density of 0.15 g/cm³ and a basis weight of 1400 g/m².

### (5) Cutting step

The fired sheet-like body obtained in the above-described firing step (4) was cut, thereby producing cut sheet-like bodies (mats).

### (a-2) Organic binder soaking step

### (1) Organic binder-adjusting step

A latex obtained by dispersing acryl rubber having a glass transition temperature (Tg) of 25°C in water (Nipol LX814) was diluted using water, thereby preparing an organic binder-containing liquid having a solid content concentration of 1 weight%. This organic binder is the first organic binder.

In addition, a latex obtained by dispersing acryl rubber having a glass transition temperature (Tg) of 1°C in water (Nipol LX811H) was diluted using water, thereby preparing an organic binder-containing liquid having a solid content concentration of 1 weight%. This organic binder is the second organic binder.

### (2) Organic binder soaking step

Next, the first organic binder was applied through spray coating onto one principal surface of the mat so that the soaked amount of the first organic binder became 1 part by weight per 100 parts by weight of the inorganic fiber. The principal surface of the mat soaked with the first organic binder served as the first principal surface.

The second organic binder was applied through spray coating onto the principal surface opposite to the first principal surface so that the soaked amount of the second organic binder became 1 part by weight per 100 parts by weight of the inorganic fiber. The principal surface of the mat soaked with the second organic binder served as the second principal surface.

### (a-3) Drying step

Next, the organic binder-soaked mat was heated and hot-air-dried at 130°C, thereby obtaining an organic binder-attached mat.

### (a-4) Cutting treatment

The mat obtained in the above-described manner was cut so that the total length became 307 mm×114 mm in planar dimensions, a protrusion section having a length of 20 mm and a width of 38 mm was formed at one end, and a recess section fitting with the protrusion section was formed at the other end, thereby completing the manufacturing of the holding seal material.

Meanwhile, the thickness of the holding seal material was 17.4 mm.

The above-described steps were carried out, thereby producing a holding seal material configuring an exhaust gas purification apparatus according to Example 1.

### (b) Winding step

The holding seal material produced through the above-described steps was wound so as to bring the first principal surface of the holding seal material into contact with a side surface of an exhaust gas treatment unit (silicon carbide honeycomb filter) having a diameter of 98 mm and a length of 125 mm, thereby producing a wound body. In this case, the holding seal material was wound so as to prevent a gap frombeing generated in a section in which the holding seal material fitted together by stretching the second region in the holding seal material.

### (c) Housing step

Next, a cylindrical stainless steel casing having an inner diameter of 128 mm and a total length of 150 mm was prepared.

Next, the wound body was pressed in up to a predetermined location inside the metal casing, thereby manufacturing an exhaust gas purification apparatus of Example 1.

### (Comparative Example 1)

An exhaust gas purification apparatus was manufactured in the same manner as in Example 1 except for the fact that the second organic binder was applied through spray coating on both the first principal surface and the second principal surface in the organic binder soaking step (2) of the organic binder soaking step (a-2) in Example 1.

### (Comparative Example 2)

An exhaust gas purification apparatus was manufactured in the same manner as in Example 1 except for the fact that the first organic binder was applied through spray coating on both the first principal surface and the second principal surface in the organic binder soaking step (2) of the organic binder soaking step (a-2) in Example 1.

### (Comparative Example 3)

An exhaust gas purification apparatus was manufactured in the same manner as in Example 1 except for the fact that the second organic binder was applied through spray coating on the first principal surface and the first organic binder was applied through spray coating on the second principal surface in the organic binder soaking step (2) of the organic binder soaking step (a-2) in Example 1.

The holding seal materials of Example 1 and the respective comparative examples were evaluated as described below.

### (Winding performance test)

The size of a gap generated in the fitting section when winding each of the holding seal materials used in Example 1 and the respective comparative examples around the exhaust gas treatment unit was measured using the following method (hereinafter, also referred to as winding performance test).

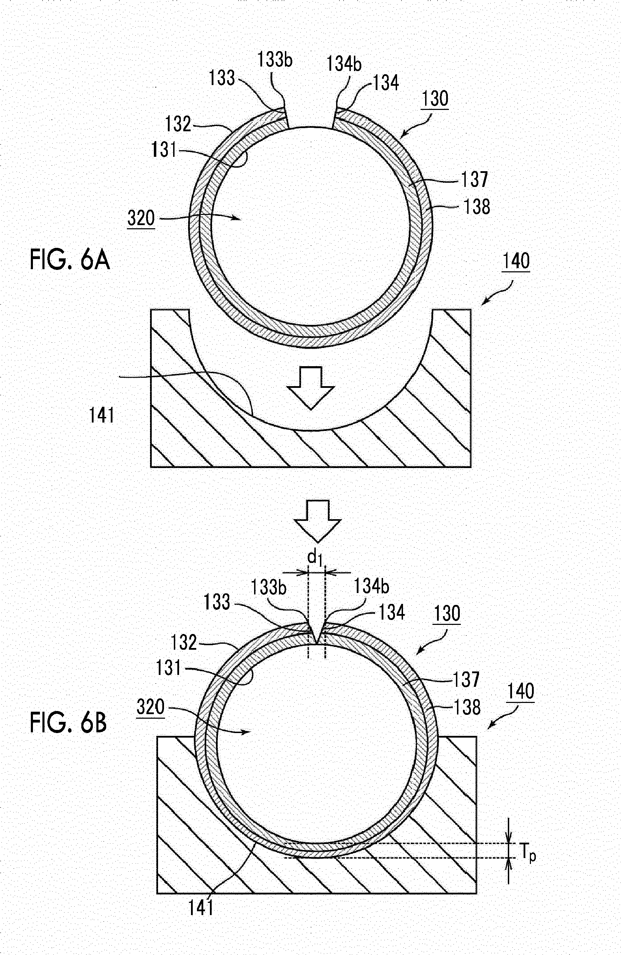

Figs. 6A and 6B are front views schematically illustrating an example of an order of a winding performance test of the holding seal material of the invention.

In the winding performance test, a concave jig 140 that was a stainless steel cuboid having a length of 150 mm, a width of 120 mm and a height of 100 mm and had a recess section 141 formed by removing a part of the top surface of the cuboid was prepared. The shape of the recess section 141 is a shape formed by removing a semi-columnar body having a diameter of 128 mm from the bottom surface of the cuboid.

In addition, a cylindrical ceramic body 320 having a diameter of 98 mm and a length of 125 mm was prepared.

The holding seal material was wound so as to bring the first principal surface 131 of the holding seal material 130 into contact with a side surface of the ceramic body 320, thereby preparing a wound body.

The produced wound body was disposed in the recess section 141 of the concave jig 140 as illustrated in Fig. 6A. In this case, the wound body was disposed so that the fitting section of the holding seal material 130 did not come into contact with the concave jig 140 (that is, the fitting section of the holding seal material was located on the upper side).

Next, as illustrated in Fig. 6A, pressure was applied to the wound body disposed in the concave jig 140 in a direction downward from the top of the wound body (direction indicated by the arrow in Fig. 6B) so as to compress the holding seal material 130 until the thickness Tₚ of the holding seal material 130 reached 15 mm in a part in which the distance between the curved surface of the recess section 141 of the concave jig 140 and the ceramic body 320 became the minimum. After that, the holding seal material 130 was wound around the ceramic body 320 so that the distance between the first end surface 133 and the second end surface 134 of the holding seal material 130 became the minimum.

After that, the distance d₁ of a gap generated between the side 133b of the holding seal material 130 and the side 134b of the holding seal material 130 was measured. The result is described in Table 1.

### (Shape-maintaining property test)

Theshape-maintaining propertyofthe holdingsealmaterial used in each of Example 1 and the respective comparative examples were tested using the following method.

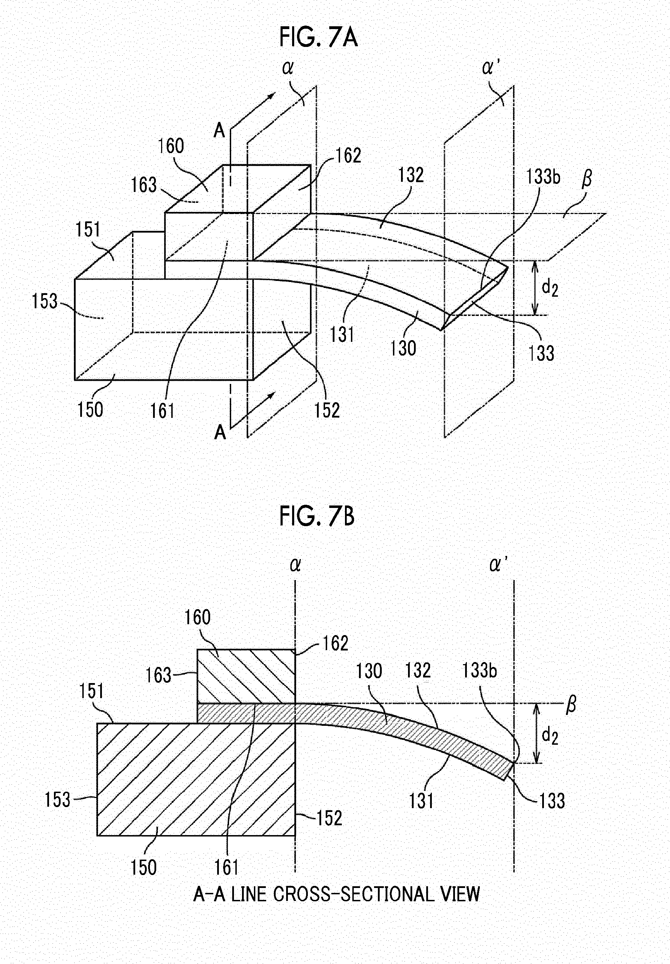

Fig. 7A is a perspective view schematically illustrating an example of a method of a shape-maintaining performance test of the holding seal material. Fig. 7B is a cross-sectional view of the schematic view of the shape-maintaining performance test illustrated in Fig. 7A taken along line A-A.

First, the same holding seal materials as in Example 1 and Comparative Examples 1 to 3 except for the fact that the protrusion section and the recess section were not formed were prepared as samples for the shape-maintaining performance test of the holding seal material (in Table 1, the results are described respectively as Example 1 and Comparative Examples 1 to 3).

Next, a cuboid test table 150 and a cuboid weight 160 were prepared.

The test table 150 has a top surface 151, a first side surface 152 and a second side surface 153 that is a side surface on the opposite side to the first side surface.

The weight 160 has a bottom surface 161, a first side surface 162 and a second side surface 163 that is a side surface on the opposite side to the first side surface.

Next, the holding seal material 130, the test table 150 and the weight 160 were disposed so as to satisfy the following relationships.

The holding seal material 130 was mounted on the test table 150 so that the longitudinal direction of the holding seal material 130 and a direction from the second side surface 153 to the first side surface 152 of the test table 150 became in parallel with each other and the first principal surface 131 of the holding seal material 130 came into contact with a top surface 151 of the test table 150.

In this case, the holding seal material 130 was disposed so that one end surface 133 of the holding seal material 130 protruded from the test table 150 in a direction from the second side surface 153 to the first side surface 152 of the test table 150.

Next, the weight 160 was mounted on the holding seal material 130 so that the longitudinal direction of the holding seal material 130 and a direction from the second side surface 163 to the first side surface 162 of the weight 160 became in parallel with each other and the second principal surface 132 of the holding seal material 130 came into contact with a bottom surface 161 of the weight 160.

In this case, the holding seal material 130 was disposed so that the first side surface 152 of the test table 150 and the first side surface 162 of the weight 160 belonged to the same imaginary plane α and the distance from a part at which the holding seal material 130 was traversed by the imaginary plane α to the end surface 133 of the holding seal material 130 protruding from the test table 150 reached 200 mm.

When the holding seal material 130, the test table 150 and the weight 160 were disposed as described above, the protruding part of the holding seal material 130 from the test table 150 is hung due to the force of gravity. The hung distance was measured. A method for measuring the hung distance is as described below.

A surface including the bottom surface 161 of the weight 160 and being in parallel with the bottom surface 161 of the weight 160 is considered as an imaginary plane β.

The above-described imaginary plane α is translated so as to come into contact with the side 133b of the holding seal material 130 (hereinafter, the imaginary plane α after the translation will be referred to as imaginary plane α').

The distance from a side formed by the intersection of the imaginary plane β and the imaginary plane α' to the side 133b of the holding seal material 130 was measured as a hung distance d₂. The results are described in Table 1.

**[Table 1]**

| | Glass transition temperature of organic binder (°C) | | Distance d₁ of gap (mm) | Hung distance d₂ (mm) |
|---|---|---|---|---|
| | First region | Second region | | |
| Example 1 | 25 | 1 | 0 | 15 |
| Comparative example 1 | 1 | 1 | 0 | 140 |
| Comparative example 2 | 25 | 25 | 3 | 29 |
| Comparative example 3 | 1 | 25 | 3 | 11 |

In the winding performance test, the distance d₁ of the gap reached 0 mm and no gap was generated in the holding seal material of Example 1. This is considered to be because the second region in the holding seal material soaked with the second organic binder stretched and filled the inside and outside circumference difference.

In addition, in the shape-maintaining property test, the hung distance d₂ was 15 mm and the holding seal material was hung slightly in Example 1. This is considered to be because the first region in the holding seal material soaked with the first organic binder has been cured.

In the winding performance test, the distance d₁ of the gap reached 0 mm and no gap was generated in the holding seal material used in the exhaust gas purification apparatus of Comparative Example 1.

However, in the shape-maintaining property test, the hung distance d₂ was 140 mm and the holding seal material was hung significantly in Comparative Example 1. This is considered to be because both the first region and the second region in the holding seal material were soaked with the second organic binder, and therefore both the first region and the second region had not been cured.

In the winding performance test, the distances of the gaps were 3 mm and gaps were generated in the holding seal materials used in the exhaust gas purification apparatuses of Comparative Examples 2 and 3. This is considered to be because the second region in the holding seal material soaked with the first organic binder had been cured and the second region could not stretch.

In addition, in the shape-maintaining property test, the hung distances d₂ were 29 mm and 11 mm respectively, and the holding seal materials hung slightly in Comparative Examples 2 and 3.

When the results of the shape-maintaining property test of Example 1 and Comparative Examples 2 and 3 were compared, there were no differences in the hung distance d₂ among them. That is, the result was that the hanging of the holding seal material can be suppressed as long as at least any one of the first region and the second region in the holding seal material is soaked with the first organic binder.

The holding seal material of the invention is a mat-like holding seal material made of an inorganic fiber holding an exhaust gas treatment unit and being provided between the exhaust gas treatment unit and a metal casing housing the exhaust gas treatment unit, and has essential components so that the holding seal material includes a first principal surface and a secondprincipal surface, the holding seal material includes a first region with a predetermined thickness including the first principal surface and a second region with a predetermined thickness including the second principal surface, the first region is soaked with a first organic binder, the second region is soaked with a second organic binder, a glass transition temperature of the first organic binder is higher than a glass transition temperature of the second organic binder, and the first principal surface is in contact with the exhaust gas treatment unit.

When the above-described essential components are combined with a variety of the configurations described in detail in the detailed description of the invention (for example, the depths of the first region and the second region in the holding seal material, the thickness of the holding seal material, the glass transition temperatures, soaked amounts and kinds of the organic binders, the number of mats configuring the holding seal material, and the like) as appropriate, it is possible to obtain desired effects.

## Claims

1. A mat-like holding seal material made of an inorganic fiber holding an exhaust gas treatment unit and being provided between the exhaust gas treatment unit and a metal casing housing the exhaust gas treatment unit,
wherein the holding seal material includes a first principal surface and a second principal surface,
the holding seal material includes a first region with a predetermined thickness including the first principal surface and a second region with a predetermined thickness including the second principal surface,
the first region is soaked with a first organic binder, and the second region is soaked with a second organic binder,
a glass transition temperature of the first organic binder is higher than a glass transition temperature of the second organic binder, and
the first principal surface is in contact with the exhaust gas treatment unit.

2. The holding seal material according to Claim 1,
wherein a length of the first region in a thickness direction is set to 1/2 or less of a thickness of the holding seal material.

3. The holding seal material according to Claim 1 or 2,
wherein a length of the second region in a thickness direction is set to 1/2 or less of a thickness of the holding seal material.

4. The holding seal material according to any one of Claims 1 to 3,
wherein the glass transition temperature of the first organic binder is in a range of 5°C to 50°C.

5. The holding seal material according to any one of Claims 1 to 4,
wherein the glass transition temperature of the second organic binder is in a range of -50°C to lower than 5°C.

6. The holding seal material according to any one of Claims 1 to 5,
wherein a soaked amount of the first organic binder is in a range of 0.2 parts by weight to 12.0 parts by weight with respect to a weight of 100 parts by weight of the holding seal material.

7. The holding seal material according to any one of Claims 1 to 6,
wherein a soaked amount of the second organic binder is in a range of 0.2 parts by weight to 12.0 parts by weight with respect to a weight of 100 parts by weight of the holding seal material.

8. The holding seal material according to any one of Claims 1 to 7,
wherein a total weight of the first organic binder and the second organic binder is in a range of 0.5 parts by weight to 3.0 parts by weight with respect to a weight of 100 parts by weight of the holding seal material.

9. The holding seal material according to any one of Claims 1 to 8,
wherein the first organic binder and the second organic binder contain at least an acryl-based resin.

10. The holding seal material according to any one of Claims 1 to 9,
wherein a thickness of the holding seal material is in a range of 2.0 mm to 20 mm.

11. The holding seal material according to any one of Claims 1 to 10,
wherein the holding seal material is made of a single mat.

12. The holding seal material according to any one of Claims 1 to 10,
wherein the holding seal material is made of a laminate of two or more mats.

13. A manufacturing method for the holding seal material according to any one of Claims 1 to 12, comprising:
a preparation step of preparing a mat-like holding seal material made of an inorganic fiber having a first principal surface and a second principal surface;
a first organic binder soaking step of soaking a first organic binder into a first region with a predetermined thickness including the first principal surface; and
a second organic binder soaking step of soaking a second organic binder having a lower glass transition temperature than a glass transition temperature of the first organic binder into a second region with a predetermined thickness including the second principal surface.

14. An exhaust gas purification apparatus comprising:
an exhaust gas treatment unit;
a metal casing housing the exhaust gas treatment unit; and
a mat-like holding seal material made of an inorganic fiber holding the exhaust gas treatment unit and being provided between the exhaust gas treatment unit and the metal casing,
wherein the holding seal material includes a first principal surface and a second principal surface,
the holding seal material includes a first region with a predetermined thickness including the first principal surface and a second region with a predetermined thickness including the second principal surface,
the first region is soaked with a first organic binder, the second region is soaked with a second organic binder,
a glass transition temperature of the first organic binder is higher than a glass transition temperature of the second organic binder, and
the holding seal material is disposed so that the first principal surface is in contact with the exhaust gas treatment unit.
